# EUROPEAN PATENT SPECIFICATION

(11) **EP 1 741 823 B1**
(45) Date of publication and mention of the grant of the patent: **11.03.2009**
(21) Application number: 06116510.6
(22) Date of filing: 03.07.2006
(51) Int. Cl.: D06F 75/12, D06F 75/20, F16K 7/06

(54) **Device to regulate the flow of steam in a domestic electrical appliance**
Vorrichtung zur Steuerung des Dampf-Durchflusses eines elektrischen Haushaltsgeräts
Dispositif permettant de réguler le flux de vapeur dans un appareil ménager électrique

(30) Priority: 05.07.2005 IT UD20050114
(43) Date of publication of application: 10.01.2007
(73) Proprietor: De'Longhi SpA, 31100 Treviso (IT)
(72) Inventor: Rigo, Flavio, 33170 Pordenone (IT)
(74) Representative: Petraz, Gilberto Luigi

(56) References cited:
- EP-A- 0 849 521
- US-A- 3 250 029
- US-A- 4 559 667
- US-A- 4 821 996
- US-A- 5 224 237
- US-A1- 2002 108 263

## Description

### FIELD OF THE INVENTION

The present invention concerns a device to regulate the flow of steam in a domestic electrical appliance, such as for example a steam iron, or a steam cleaning machine.

### BACKGROUND OF THE INVENTION

A device is known, for example from the European patent EP-B-0849521, able to control the flow of steam generated by a boiler and conveyed by means of a pipe to a steam iron.

The known device comprises a pressure element disposed in contact with a segment of pipe and connected to a drive element, disposed outside and free to rotate on a longitudinal axis X.

The known device then transforms the rotational movement of the drive element into an axial movement of the pressure element, which thus exerts a variable pressure on the pipe, so as to regulate the quantity of steam that flows through the pipe.

The known device, however, has the disadvantage that it has a rather limited range of values for regulating the steam delivery.

One purpose of the present invention is to achieve a device that allows to regulate the flow of steam in a domestic electrical appliance in a gradual manner, with a high degree of precision and with a wide regulation range.

Another purpose of the present invention is to achieve a device which also allows to accommodate inside it means to command other functions of the domestic electrical appliance, such as for example switching it on or off.

The Applicant has devised, tested and embodied the present invention to overcome the shortcomings of the state of the art and to obtain these and other purposes and advantages.

### SUMMARY OF THE INVENTION

The present invention is set forth and characterized in the main claim, while the dependent claims describe other characteristics of the invention or variants to the main inventive idea.

In accordance with the above purpose, a device according to the present invention is able to be used to regulate the flow of steam in a domestic electrical appliance, of the type having steam generation means, for example a steam iron or a cleaning machine, and a pipe to convey the steam from said generation means to the means that uses the steam.

The pipe is made, at least for a segment, of elastically deformable material, such as for example rubber or other equivalent material.

The device according to the present invention comprises at least a pressure element which is connected to an external drive element, which is free to rotate on a longitudinal axis X, and is able to exert a selectively variable pressure on the pipe, in order to regulate the quantity of steam that flows through said pipe.

According to a characteristic of the present invention, the drive element comprises a thrust surface disposed in contact with a mating surface of the pressure element. The thrust surface lies on a plane P inclined by a determinate angle β with respect to another plane P1 substantially orthogonal to the longitudinal axis X, in such a manner that the rotation of the external drive element determines a variation in the pressure exerted by the pressure element on the pipe.

The invention allows to effect a regulation of the flow of steam, transforming the movement of rotation of the drive element into an oscillatory movement of the pressure element associated therewith. To be more exact, the oscillation of the pressure element occurs with respect to a point, or a plurality of points, determined by the intersection between the longitudinal axis X of the drive element and the longitudinal axis Y of the pressure element. By rotating the drive element, the slope of the pressure element with respect to the segment of pipe thus varies, and therefore the pressure exerted by the pressure element on the outer surface of said segment also varies.

In this way, the delivery of the steam can be regulated gradually, with great accuracy and in a wide range of values defined by the angle of rotation of the drive element.

According to an advantageous solution the pressure element comprises contact means, for example protrusions, teeth cooperating with the outer surface of the pipe and able to vary at least its cross section.

According to another advantageous embodiment of the invention, the device also comprises housing means able to house at least said segment of pipe, the pressure element and the external drive element. Said means defines a seating able to contain, in the same integrated structure with the pressure element and the external drive element, means to command at least the steam generation means.

According to an advantageous solution of the invention, the drive element has a size such as to allow it to rotate easily, with reduced drive force.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a perspective view of an iron with a separate boiler that uses a device according to the present invention to regulate the flow of steam;
- fig. 2 is a lateral view of the device in fig. 1;
- fig. 3 is a longitudinal section of the device in fig. 2;
- fig. 4 is a section from IV to IV of the device in fig. 2;
- fig. 5 is an exploded view of a knob, a pressure ring and a housing, used in the device in fig. 2;
- fig. 6 is a lateral view of the knob and the pressure ring in fig. 5, in a first operating condition;
- fig. 7 is a lateral view of the knob and the pressure ring in fig. 5, in a second operating condition.

### DETAILED DESCRIPTION OF A PREFERENTIAL FORM OF EMBODIMENT

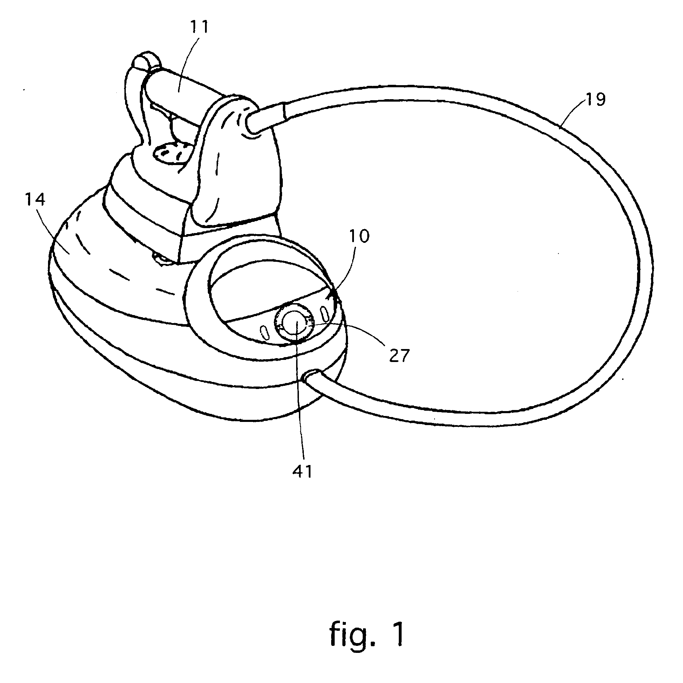

With reference to fig. 1, a device 10 according to the present invention can be used in a domestic electrical appliance, such as for example an iron 11 connected to a boiler 14, which is contained in a unit, or casing, separated from the iron 11 itself, in order to regulate the flow of steam from the latter.

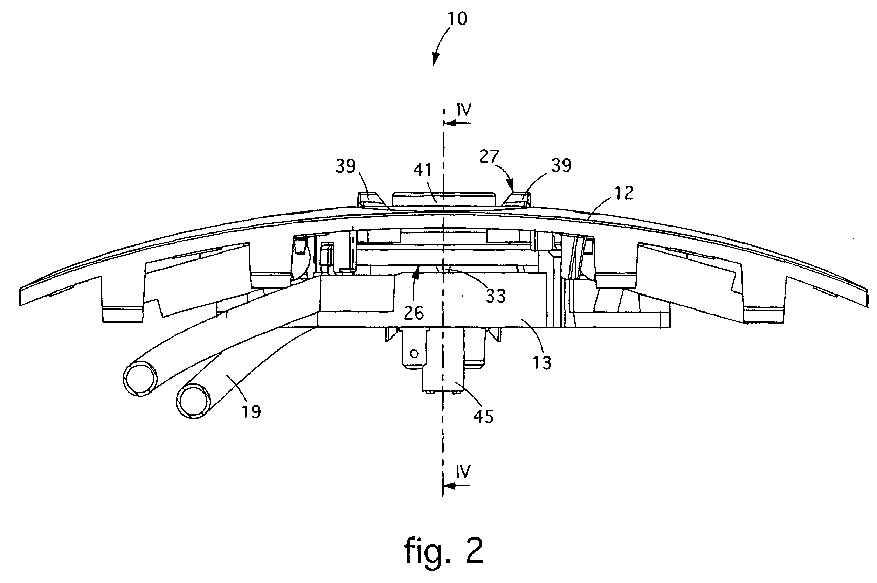

The device 10 comprises a support 12, shown in fig. 2, having a shape that adapts to the aesthetics of the unit, and positioned on the front surface of the unit containing the boiler 14.

A housing 13 (figs. 2, 3, 4, 5, 7) is made solid inside the support 12, and comprises two cylindrical walls, respectively outer 15 and inner 16, disposed concentric with each other and defining a central seating 18, circular in shape, into which a segment of tube 19 is inserted, made of elastically deformable material, which connects the boiler 14 to the iron 11. The central seating 18 is shaped in such a manner as to make the segment of tube 19 assume a U-shaped disposition.

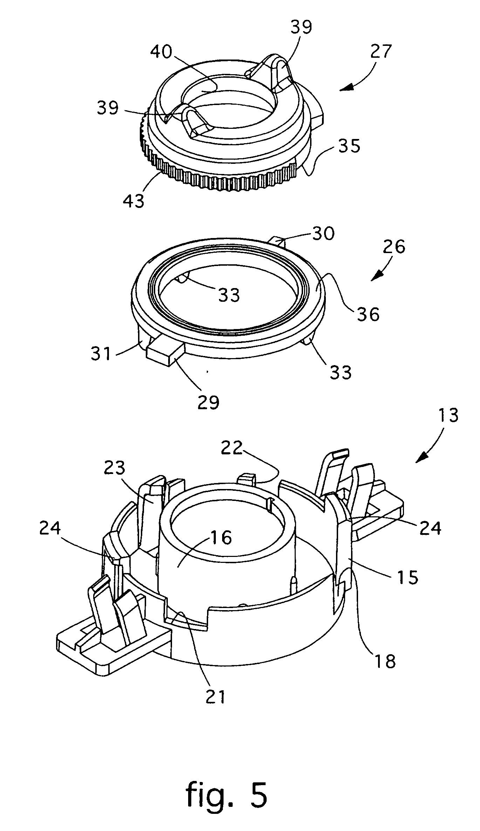

The housing 13 is also provided with two hollows, respectively first 21 and second 22 (fig. 5), made on the outer wall 15 on opposite sides, and with a tooth 23, also made on the outer wall 15. The housing also comprises a pair of attachment elements, each of which is provided with two little hooks 24 which allow it to be attached to the support 12.

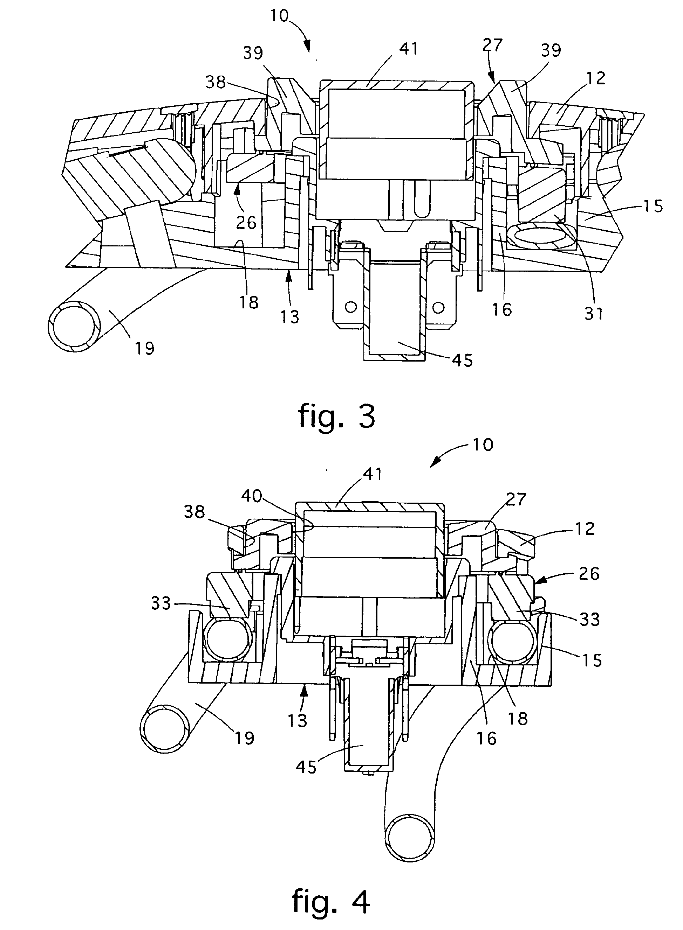

The device 10 also comprises a pressure ring 26 and a regulation knob 27 (figs. 3 to 7).

The pressure ring 26 is inserted coaxially to the inner wall 16 in the central seating 18 and comprises two protrusions, respectively first 29 and second 30 which branch off radially, and a tooth 31 that develops from a lower surface so as to contact the underlying segment of tube 19.

The two protrusions 29, 30 are inserted in the respective hollows 21, 22 of the housing 13, so that the coupling of the protrusions-hollows prevents the pressure ring 26 from rotating with respect to the housing 13.

On the outside, the knob 27 has two gripper elements 39 and a through hole 40 disposed centrally in which a button 41 is inserted, free to slide with respect to the longitudinal axis X of the knob 27.

On one part of its lateral surface, the knob 27 is provided with a toothed ring-nut 43 (fig. 5) able to cooperate with the tooth 23 of the housing 13 in order to define a plurality of angular positions of the knob 27 with respect to the housing 13.

The knob 27 is disposed in such a manner that a lower surface 35 thereof contacts an upper surface 36 of the pressure ring 26 (figs. 5, 6 and 7).

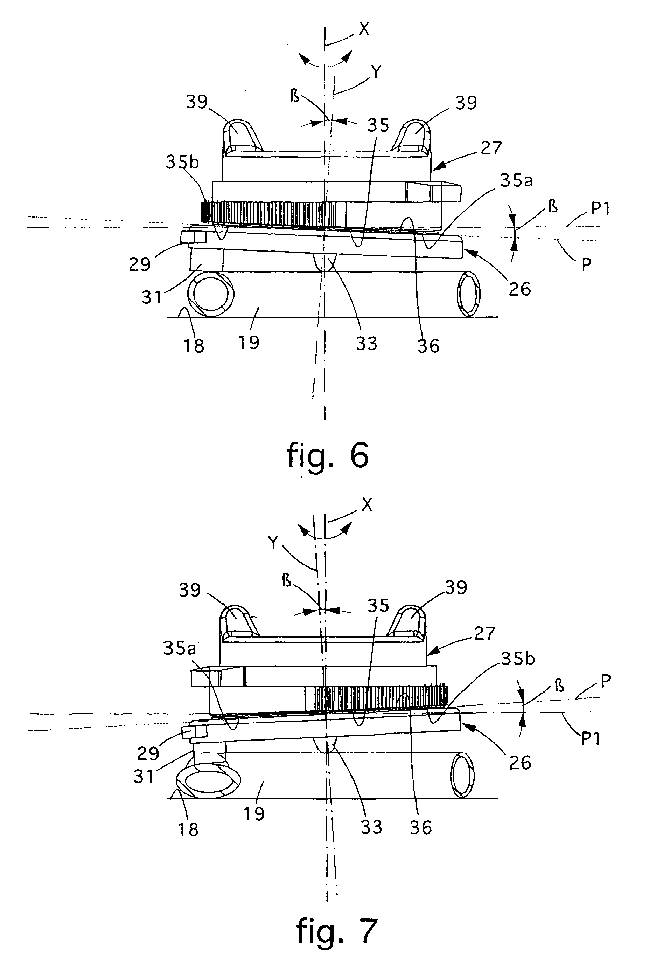

The lower surface 35 lies on a plane P (figs. 6 and 7) inclined with respect to a plane P1 orthogonal to the longitudinal axis X of the knob 27. The plane P is orthogonal to a longitudinal axis Y of the pressure ring 26, and has a first portion 35a where the longitudinal thickness of the knob 27 is at its maximum and a second portion 35b where the longitudinal thickness is at its minimum. The two planes P and P1, and hence the two longitudinal axes X and Y, are therefore inclined to each other by an angle β comprised between about 5° and about 15°.

Fig. 6 shows a first operating condition of the device 10, in which the knob 27 is disposed in such a manner that the second portion 35b of the lower surface 35 is in correspondence with the tooth 31 of the pressure ring 26. In this first condition, the tooth 31 substantially does not exert any pressure on the segment of tube 19 below, thus allowing the flow of steam to pass.

As the knob 27 rotates, the lower surface 35 of the latter rotates with respect to the upper surface 36 of the pressure ring 26 so that the first portion 35a approaches the tooth 31. The pressure exerted by the latter on the segment of tube 19 below increases, and therefore the cross section of the tube 19 decreases proportionally to the height assumed by the tooth 31 and hence the angular position of the knob 27.

Given that the first and second portion 35a, 35b are disposed on opposite sides of the lower surface 35, the useful field of rotation of the knob 27 is about 180°.

At the end of travel (fig. 7), that is, when the rotation of the knob 27 has covered an angle of 180°, the first portion 35a of the lower surface 35 is in correspondence with the tooth 31, which is completely lowered on the segment of tube 19, reducing to a minimum the passage of steam in the segment of tube 19, and thus defining a second operating condition of the device 10.

The device 10 according to the present invention therefore allows to effect a regulation of the flow of steam that can be graduated with great precision and in a wide range of values defined by the reciprocal position of the first and second portion 35a, 35b of the lower surface 35 with respect to the position of the tooth 31 of the pressure ring 26 and the inclination β of the plane P with respect to the plane P1.

Moreover, the tooth 23 and the toothed ring-nut 43 allow to temporarily and selectively clamp the knob 27 in a desired position of regulation, preventing unwanted variations in the angular position of the knob 27 itself.

According to the invention, the inner wall 16 of the housing 13 is tubular, so as to allow cooperation between the button 41, inserted in the through hole 40, with a switch 45 clamped to the housing 13 and able to be used, for example, to enable or dis-enable the functioning of the boiler 14 of the iron 11.

It is clear that modifications and/or additions of parts may be made to the device 10 as described heretofore, without departing from the scope of the present invention as defined by the appended claims.

According to a variant, instead of or together with the button 41 and the switch 45, another knob is used, able to rotate with respect to the longitudinal axis X, and cooperating with corresponding mechanical members attached to the housing 13.

According to another variant, the housing 13 defines a seating able to contain at least an indicator element, for example a manometer, integrated in the same structure with the pressure ring 26 and the knob 27, and able to indicate or display information connected to the state of functioning of the iron 11, for example the pressure of the steam in the boiler 14.

It is also clear that, although the present invention has been described with reference to some specific examples, a person of skill in the art shall certainly be able to achieve many other equivalent forms of device to regulate the flow of steam in a domestic electrical appliance, having the characteristics as set forth in the claims and hence all coming within the field of protection defined thereby.

## Claims

1. Device to regulate the flow of steam in a domestic electrical appliance having steam generation means (14), elements (11) that use the steam generated by said generation means (14), and a pipe (19) made, at least for a segment, of elastically deformable material and able to convey said steam towards said elements (11), said device comprising at least a pressure element (26) connected to a drive element (27), free to rotate on a longitudinal axis (X), and able to exert a selectively variable pressure on said pipe (19) in order to regulate the quantity of said steam that flows through said pipe (19), **characterized in that** said drive element (27) comprises a thrust surface (35) lying on a first plane (P) inclined with respect to a second plane (P1) substantially orthogonal to said longitudinal axis (X), and **in that** said thrust surface (35) is disposed in contact with a mating surface (36) of said pressure element (26), in such a manner that the rotation of said drive element (27) determines a variation in the pressure exerted by said pressure element (26) on said pipe (19).

2. Device as in claim 1, **characterized in that** said first and second planes (P, P1) define an angle (β) comprised between about 5° and about 15°.

3. Device as in claim 1 or 2, **characterized in that** said pressure element (26) comprises contact means (31) cooperating with the outer surface of said segment of said pipe (19) and able to vary at least the cross section of said segment, so as to vary the pressure exerted on said segment.

4. Device as in claim 3, **characterized in that** said contact means comprises at least a first tooth (31) protruding from a surface of said pressure element (26) opposite said mating surface (36).

5. Device as in claim 4, **characterized in that** said contact means comprises at least two second teeth (33) disposed substantially equidistant from said first tooth (31) and defining a supporting fulcrum for the movement of said pressure element (26).

6. Device as in any claim hereinbefore, **characterized in that** said pressure element (26) has a substantially annular shape.

7. Device as in any claim hereinbefore, **characterized in that** said external drive element (27) has an at least partly cylindrical shape, hollow inside.

8. Device as in any claim hereinbefore, **characterized in that** it further comprises housing means (13) able to house at least said segment of said pipe (19), said pressure element (26) and said external drive element (27).

9. Device as in claim 8, **characterized in that** said housing means (13) defines a seating able to contain at least a command element (41, 45) integrated into the same structure with said pressure element (26) and said external drive element (27), and able to command, or regulate, at least said steam generation means (14).

10. Device as in claim 9, **characterized in that** said command element comprises at least an actuation button (41) able to be axially actuated with respect to said longitudinal axis (X), and a switch (45) cooperating with said actuation button (41) and attached to said housing means (13).

11. Device as in claim 8, **characterized in that** said housing means (13) defines a seating able to contain at least an indicator element integrated into the same structure with said pressure element (26) and said external drive element (27), and able to indicate or display information connected to the state of functioning of said domestic electrical appliance (11).

12. Device as in claim 11, **characterized in that** said indicator element comprises at least a manometer able to display the value of pressure of the steam in said steam generation means (14).

## Patentansprüche

1. Vorrichtung zum Einstellen des Durchflusses von Dampf in einem elektrischen Haushaltsgerät, aufweisend Dampferzeugungsmittel (14), Elemente (11), welche den durch das Dampferzeugungsmittel (14) erzeugten Dampf verwenden, und ein Rohr (19), das für zumindest einen Abschnitt von elastisch verformbaren Materials gefertigt ist, und in der Lage ist, den Dampf in Richtung der Elemente (11) zu leiten, wobei die Vorrichtung zumindest ein Druckelement (26) aufweist, welches mit einem Ansteuerelement (27) verbunden ist, sich frei um eine Längsachse (X) dreht, und in der Lage ist, auf das Rohr (19) einen selektiv variablen Druck auszuüben, um die Menge des Dampfes, welcher durch das Rohr (19) fließt, einzustellen, **dadurch gekennzeichnet, dass** das Ansteuerelement (27) eine Druckoberfläche (35) aufweist, die auf einer ersten Ebene (P) liegt, die in Bezug auf eine zweite Ebene (P1) geneigt ist, welche im Wesentlichen senkrecht zu der Längsachse (X) ist, und wobei die Druckoberfläche (35) in solch einer Weise in Kontakt mit einer Passfläche (36) des Druckelements (26) angeordnet ist, dass die Drehung des Ansteuerelements (27) eine Variation des durch das Druckelement (26) auf das Rohr (19) ausgeübten Drucks bestimmt.

2. Vorrichtung nach Anspruch 1, **dadurch gekennzeichnet, dass** die erste und zweite Ebene (P, P1) einen Winkel (β) definieren, welcher zwischen etwa 5° und 15° liegt.

3. Vorrichtung nach Anspruch 1 oder 2, **dadurch gekennzeichnet, dass** das Druckelement (26) Kontaktmittel (31) aufweist, welche mit der äußeren Oberfläche des Abschnitts des Rohrs (19) zusammenwirken, und in der Lage sind, zumindest den Querschnitt des Abschnitts zu ändern, um den auf den Abschnitt ausgeübten Druck zu variieren.

4. Vorrichtung nach Anspruch 3, **dadurch gekennzeichnet, dass** das Kontaktmittel zumindest einen ersten Zahn (31) aufweist, welcher von einer Oberfläche des Druckelements (26) hervorsteht, die gegenüberliegend zu der Passfläche (36) angeordnet ist.

5. Vorrichtung nach Anspruch 4, **dadurch gekennzeichnet, dass** das Kontaktmittel zumindest zwei zweite Zähne (33) aufweist, welche im Wesentlichen gleich weit entfernt von dem ersten Zahn (31) angeordnet sind, und einen Stützpunkt für die Bewegung des Druckelements (26) definieren.

6. Vorrichtung nach einem der vorhergehenden Ansprüche, **dadurch gekennzeichnet, dass** das Druckelement (26) eine im Wesentlichen ringförmige Form aufweist.

7. Vorrichtung nach einem der vorhergehenden Ansprüche, **dadurch gekennzeichnet, dass** das externe Ansteuerelement (27) eine zumindest teilweise zylindrische, innen hohle Form aufweist.

8. Vorrichtung nach einem der vorhergehenden Ansprüche, **dadurch gekennzeichnet, dass** diese ferner ein Gehäusemittel (13) aufweist, das in der Lage sind, zumindest den Abschnitt des Rohrs (19), das Druckelement (26) und das externe Ansteuerelement (27) aufzunehmen.

9. Vorrichtung nach Anspruch 8, **dadurch gekennzeichnet, dass** das Gehäusemittel (13) eine Aufnahme definiert, die in der Lage ist, zumindest ein Befehlselement (41, 45) zu enthalten, das mit dem Druckelement (26) und dem externen Ansteuerelement (27) in derselben Anordnung integriert ist, und in der Lage ist, zumindest das Dampferzeugungsmittel (14) zu befehligen bzw. einzustellen.

10. Vorrichtung nach Anspruch 9, **dadurch gekennzeichnet, dass** das Befehlselement zumindest einen Betätigungsknopf (41), welcher in der Lage ist, in Bezug auf die Längsachse (X) axial betätigt zu werden, und einen Schalter (45) aufweist, der mit dem Betätigungsknopf (41) zusammenwirkt, und an dem Gehäusemittel (13) befestigt ist.

11. Vorrichtung nach Anspruch 8, **dadurch gekennzeichnet, dass** das Gehäusemittel (13) eine Aufnahme definiert, die in der Lage ist, zumindest ein Anzeigeelement zu enthalten, welches in derselben Anordnung wie das Druckelement (26) und das externe Ansteuerelement (27) integriert ist, und in der Lage ist, Informationen betreffend den Funktionszustand der elektrischen Haushaltsvorrichtung (11) anzuzeigen bzw. darzustellen.

12. Vorrichtung nach Anspruch 11, **dadurch gekennzeichnet, dass** das Anzeigeelement zumindest ein Manometer aufweist, welches in der Lage ist, den Wert des Dampfdrucks in dem Dampferzeugungsmittel (14) anzuzeigen.

## Revendications

1. Dispositif de régulation du flux de vapeur dans un appareil électroménager doté de moyens de génération de vapeur (14), d'éléments (11) qui utilisent la vapeur générée par lesdits moyens de génération (14) et d'un tuyau (19) fait, au moins en ce qui concerne un segment, d'un matériau élastiquement déformable, et apte à acheminer ladite vapeur vers lesdits éléments (11), ledit dispositif comprenant au moins un élément de pression (26) raccordé à un élément d'entraînement (27), libre de tourner sur un axe longitudinal (X), et apte à exercer une pression sélectivement variable sur ledit tuyau (19) afin de réguler la quantité de ladite vapeur qui s'écoule à travers ledit tuyau (19), **caractérisé en ce que** ledit élément d'entraînement (27) comprend une surface de poussée (35) reposant sur un premier plan (P) incliné par rapport à un second plan (P1) sensiblement perpendiculaire audit axe longitudinal (X), et **en ce que** ladite surface de poussée (35) est disposée de manière à entrer en contact avec une surface correspondante (36) dudit élément de pression (26), de telle manière que la rotation dudit élément d'entraînement (27) détermine une variation de la pression exercée par ledit élément de pression (26) sur ledit tuyau (19).

2. Dispositif selon la revendication 1, **caractérisé en ce que** lesdits premier et second plans (P, P1) définissent un angle (β) compris entre environ 5° et environ 15°.

3. Dispositif selon la revendication 1 ou 2, **caractérisé en ce que** ledit élément de pression (26) comprend des moyens de contact (31) coopérant avec la surface externe dudit segment dudit tuyau (19) et apte à modifier au moins la coupe transversale dudit segment, de manière à faire varier la pression exercée sur ledit segment.

4. Dispositif selon la revendication 3, **caractérisé en ce que** lesdits moyens de contact comprennent au moins une première dent (3 1) faisant saillie depuis une surface dudit élément de pression (26) face à ladite surface correspondante (36).

5. Dispositif selon la revendication 4, **caractérisé en ce que** lesdits moyens de contact comprennent au moins deux secondes dents (33) disposées de manière à être sensiblement équidistantes de ladite première dent (31) et définissant un sommet de support pour le mouvement dudit élément de pression (26).

6. Dispositif selon l'une quelconque des revendications précédentes, **caractérisé en ce que** ledit élément de pression (26) a une forme sensiblement annulaire.

7. Dispositif selon l'une quelconque des revendications précédentes, **caractérisé en ce que** ledit élément d'entraînement externe (27) a un intérieur creux de forme au moins partiellement cylindrique.

8. Dispositif selon l'une quelconque des revendications précédentes, **caractérisé en ce qu'**il comprend en outre des moyens de logement (13) aptes à loger au moins ledit segment dudit tuyau (19), ledit élément de pression (26) et ledit élément d'entraînement externe (27).

9. Dispositif selon la revendication 8, **caractérisé en ce que** lesdits moyens de logement (13) définissent une assise apte à contenir au moins un élément de commande (41, 45) intégré dans la même structure que ledit élément de pression (26) et ledit élément d'entraînement externe (27), et apte à commander, ou réguler, au moins lesdits moyens de génération de vapeur (14).

10. Dispositif selon la revendication 9, **caractérisé en ce que** ledit élément de commande comprend au moins un bouton d'actionnement (41) apte à être actionné axialement par rapport audit axe longitudinal (X), et un interrupteur (45) coopérant avec ledit bouton d'actionnement (41) et fixé auxdits moyens de logement (13).

11. Dispositif selon la revendication 8, **caractérisé en ce que** lesdits moyens de logement (13) définissent une assise apte à contenir au moins un élément indicateur intégré dans la même structure que ledit élément de pression (26) et ledit élément d'entraînement externe (27), et apte à indiquer ou afficher des informations concernant l'état de fonctionnement dudit appareil électroménager (11).

12. Dispositif selon la revendication 11, **caractérisé en ce que** ledit élément indicateur comprend au moins un manomètre apte à afficher la valeur de pression de la vapeur dans lesdits moyens de génération de vapeur (14).
